# EUROPÄISCHE PATENTSCHRIFT

(11) **EP 2 320 777 B1**
(45) Veröffentlichungstag und Bekanntmachung des Hinweises auf die Patenterteilung: **11.12.2013**
(21) Anmeldenummer: 09781183.0
(22) Anmeldetag: 28.07.2009
(51) Int. Cl.: A47J 43/07

(54) **ELEKTRISCH BETREIBBARES KLEINGERÄT MIT HALTEVORRICHTUNG**
ELECTRICALLY OPERABLE SMALL APPLIANCE WITH HOLDING DEVICE
PETIT APPAREIL À ENTRAÎNEMENT ÉLECTRIQUE AVEC DISPOSITIF DE RETENUE

(30) Priorität: 01.08.2008 DE 102008035980
(43) Veröffentlichungstag der Anmeldung: 18.05.2011
(73) Patentinhaber: BSH Bosch und Siemens Hausgeräte GmbH, 81739 München (DE)
(72) Erfinder: KRÜGER, Tobias, 80634 München (DE); GOLAVSEK, Samo, 3312 Prebold (SI); DANIJEL, Roman, 3312 Ljubno (SI); POGACAR, Toni, 3311 Sempeter (SI)
(86) Internationale Anmeldenummer: PCT/EP2009/059734
(87) Internationale Veröffentlichungsnummer: WO 2010/012725

(56) Entgegenhaltungen:
- DE-A1- 3 501 161
- DE-B4- 10 021 314
- DE-C1- 10 030 034
- GB-A- 2 080 680
- US-A1- 2008 032 543

## Beschreibung

Die Erfindung betrifft ein elektrisch betreibbares Kleingerät, insbesondere ein Haushalts-Kleingerät wie z.B. einen Stabmixer. Die Haltevorrichtung dient der hängenden Aufbewahrung des Kleingeräts.

Ein Großteil der elektrisch betreibbaren Haushalts-Kleingeräte weist ein Anschlusskabel auf, mit dem ein im Gerät enthaltener Stromverbraucher mit einer Stromquelle verbunden werden kann. Das Anschlusskabel ist typischerweise 1 - 2 m lang. Zur Lagerung dieser Kleingeräte wird das Anschlusskabel typischerweise um das Kleingerät herum gewickelt und das Kleingerät anschließend in einer Schublade oder einem Regal verstaut. Dabei kann sich die Wickelung des Anschlusskabels lösen, was ein ungeordnetes, verdrilltes und/oder verknotetes Kabelknäuel zur Folge haben kann - insbesondere dann, wenn mehrere Kleingeräte gemeinsam im der Schublade oder dem Regal verstaut werden. Zur geordneten Fixierung des Anschlusskabels beim Gebrauch des Kleingeräts wird in der DE-OS 26 32 080 vorgeschlagen, den Stecker des Anschlusskabels mit einer Fixiervorrichtung zu versehen, die es gestattet, um den Stecker herumgeschlungene Windungen des Anschlusskabels räumlich festzulegen. Eine solche Fixiervorrichtung ist zwar gut dazu geeignet, "Überlängen" des Anschlusskabels während des Gebrauchs des Geräts aufzunehmen, hat aber bei der Lagerung des Geräts den Nachteil eines erhöhten Platzbedarfs. Aus der DE 198 22 635 A1 ist ein Befestigungselement bekannt, mit der ein Anschlusskabel eines Kleingeräts während der Lagerung fixiert werden kann. Dieses Befestigungselement ist am Kabelende in Netzsteckernähe befestigt und gestattet ein Aufschnappen des Kabelendes an einer beliebigen Windung des Anschlusskabels. Zwar gestattet dieses Befestigungselement eine Fixierung des um das Gerät geschlungenen Anschlusskabels, es löst jedoch nicht die Problematik des Platzbedarfs für die Lagerung des Geräts.

Die EP 1 741 520 A2 offenbart ein elektrisch betreibbares Werkzeug an welchem eine Haltevorrichtung zur hängenden Aufbewahrung angeordnet ist. DE 100 21 314 B4 offenbart einen Haartrockner mit einem Auflagebereich, welcher das Aufwickeln des Stromkabels in eine geordneten Art und Weise erlaubt. Die DE 196 80 452 C2 offenbart ebenfalls eine Vorrichtung welche das geordnete Aufwickeln des Anschlusskabels ermöglicht.

Der Erfindung liegt die Aufgabe zugrunde, ein solches elektrisch betreibbares Kleingerät in einer solchen Weise weiterzuentwickeln, dass eine effektive und raumsparende Aufbewahrung des Kleingeräts ermöglicht wird. Insbesondere soll das Anschlusskabel in einer wohlgeordneten Weise am Kleingerät festgelegt werden können.

Die Aufgabe wird durch die Merkmale des Anspruchs 1 gelöst. Vorteilhafte Ausgestaltungen sind Gegenstand der Unteransprüche.

Danach ist das Kleingerät mit einer Haltevorrichtung zur hängenden Aufbewahrung versehen. Die Haltevorrichtung weist eine ringförmige Aussparung (Schlaufe) auf, mit der das Kleingerät an einem Halterungselement, beispielsweise an einem an der Küchenwand befestigten Haken, aufgehängt werden kann. Anstelle einer liegenden oder stehenden Aufbewahrung des Kleingeräts gestattet die Haltevorrichtung somit eine hängende Aufbewahrung. Diese Art der Lagerung ist platzsparend und effektiv, da das Kleingerät bei Nichtgebrauch an beliebigen, an den Wänden oder in Schränken vorgesehenen Haltemitteln aufgehängt werden kann und z.B. gemeinsam mit anderen Küchengeräten an einer Hakenleiste an der Küchenwand gehalten werden kann.

Erfindungsgemäß umfasst die Haltevorrichtung neben der ringförmigen Aussparung (Schlaufe) einen randoffenen Hohlraum, in die das Anschlusskabel eingeführt bzw. eingeklemmt werden kann. Auf diese Weise kann das lose Ende des Anschlusskabels rasch, sicher und in einfacher Weise am Gehäuse des Kleingeräts festgelegt und im Bedarfsfall wieder gelöst werden: Im Nichtgebrauchszustand des Kleingeräts kann das Kabel um das Gehäuse herum gewickelt und mit seinem steckerseitigen Ende im randoffenen Hohlraum der Haltevorrichtung festgeklemmt werden, um die Wickelung des Kabels zu fixieren und das Kabel während des Nichtgebrauchs in einem raumsparenden, geordneten Zustand zu halten, wobei der Hohlraum dergestalt ausgebildet ist, dass das im Hohlraum gehaltene Anschlusskabel entlang seiner Axialrichtung frei im Hohlraum gleiten kann.

Die Haltevorrichtung ist vorteilhafterweise fest mit dem Kleingerät verbunden. Insbesondere kann die Haltevorrichtung an das Gehäuse des Kleingeräts angeformt sein, so dass die Haltevorrichtung einteilig mit dem Gehäuse ausgebildet ist. Umfasst das Gehäuse des Kleingeräts schalenförmige, miteinander gefügte Einzelteile (z.B. aus Kunststoff), so kann die Haltevorrichtung, die beispielsweise aus einem elastischen Kunststoff, einem Blech und/oder einem Draht besteht, in einer solchen Weise zwischen den schalenförmigen Einzelteilen aufgenommen sein, dass die Schlaufe nach außen abragt.

Das Kleingerät weist ein Anschlusskabel auf, das zur Verbindung des Kleingeräts an eine Stromquelle dient und die Haltevorrichtung ist an eine Kabeltülle angeformt, die das Kabel in seinem Austrittsbereich aus dem Gehäuse des Kleingeräts ringförmig umgibt. Ein solches Anformen der Haltevorrichtung an die Kabeltülle lässt sich herstellungstechnisch sehr einfach und preiswert bewerkstelligen. Die Haltevorrichtung bildet die Kabeltülle, die fest mit dem Gehäuse verbunden ist. Die Kabeltülle besteht üblicherweise aus einem elastischen Kunststoff, so dass auch die Haltevorrichtung aus einem elastischen Kunststoff gebildet wird. Um (insbesondere bei höhergewichtigen Kleingeräten) die Haltbarkeit der Haltevorrichtung zu erhöhen, kann die Haltevorrichtung, insbesondere die Schlaufe, mit einer Seele aus Metalldraht oder einer metallischen Armierung versehen sein.

Eine Anordnung der Haltevorrichtung im Bereich der Kabeltülle (bzw. als Teil der Kabeltülle) eignet sich insbesondere bei stabförmigen Kleingeräten (z.B. Stabmixern), bei denen das Anschlusskabel im Kopfbereich des Kleingeräts aus dem Gehäuse austritt; in diesem Fall ermöglicht die Haltevorrichtung eine Aufhängung des Kleingeräts in Gebrauchslage.

Der randoffene Hohlraum weist eine Einführöffnung auf, durch die eine oder mehrere Windungen des Anschlusskabels in den Hohlraum hineingeschoben werden können. Die Breite der Einführöffnung ist geringer als der Querschnitt des Anschlusskabels, um zu verhindern, dass sich das Anschlusskabel von alleine aus dem Hohlraum lösen kann. Der Querschnitt des randoffenen Hohlraums ist größer als der Querschnitt des Anschlusskabels, so dass das Anschlusskabel im Hohlraum ungehindert in Axialrichtung des Kabels gleiten kann.

Zur Fixierung des Kabelabschnitts in der Einführöffnung kann diese mit einer reibungserhöhenden Riffelung oder mit Noppen versehen sein; dies empfiehlt sich insbesondere dann, wenn die Haltevorrichtung aus einem Werkstoff mit glatter Oberfläche, beispielsweise einem Metall oder einem thermoplastischen Kunststoff besteht.

Im Folgenden wird die Erfindung anhand eines in den Figuren dargestellten Ausführungsbeispiels näher erläutert. Dabei zeigen:
- Fig. 1: eine schematische perspektivische Ansicht eines Kleingeräts mit einer erfindungsgemäßen Haltevorrichtung;
- Fig. 2: eine schematische Detaildarstellung einer am Kopfteil des Kleingeräts gehaltenen Kabeltülle mit daran angeformter Haltevorrichtung;
- Fig. 3: eine Schnittdarstellung des Anschlusskabels.

In den Zeichnungen sind einander entsprechende Elemente mit denselben Bezugszeichen bezeichnet. Die Zeichnungen stellen ein schematisches Ausführungsbeispiel dar und geben keine spezifischen Parameter der Erfindung wieder. Weiterhin dienen die Zeichnungen lediglich zur Erläuterung einer vorteilhaften Ausführungsform der Erfindung dar und sollen nicht in einer solchen Weise interpretiert werden, dass sie den Schutzbereich der Erfindung einengen.

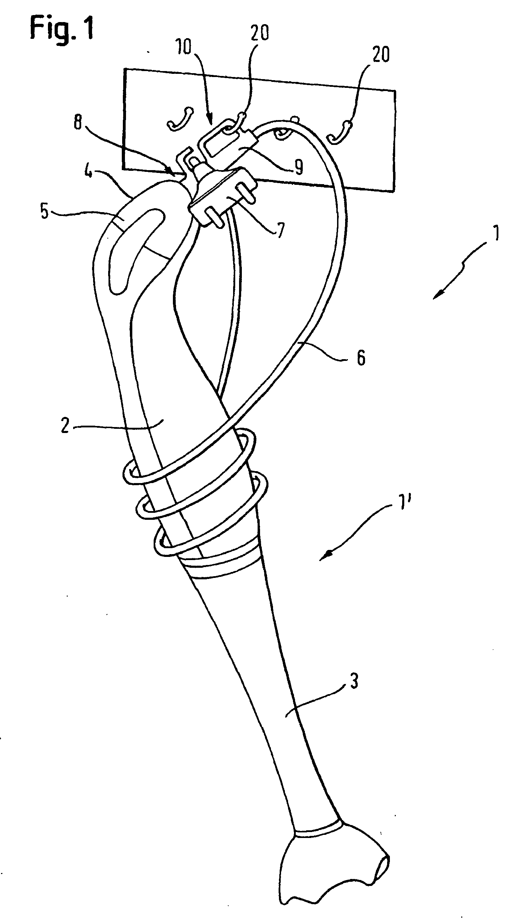

Figur 1 zeigt eine perspektivische Ansicht eines elektrisch betreibbaren Stabmixers 1' als Beispiel eines elektrisch betreibbaren Kleingeräts 1. An dem Stabmixer 1' ist ein als Schneid- bzw. Pürierwerk ausgebildetes Werkzeug 3 montiert. Der Stabmixer 1' weist ein Gehäuse 2 auf, das miteinander verbundene Halbschalen aus Kunststoff umfasst. In einem Kopfteil 4 des Gehäuses 2 befindet sich ein Schalter 5, mit dessen Hilfe der Stabmixer 1' in Betrieb genommen wird. Zur Stromversorgung des Stabmixers 1' ist ein Anschlusskabel 6 vorgesehen, dessen freies Ende einen Stecker 7 aufweist, mit dem der Stabmixer 1' an eine Netzsteckdose angeschlossen werden kann. Das Anschlusskabel 6 tritt im Bereich des Kopfteils 4 aus dem Gehäuse 2 heraus und ist im Austrittsbereich 8 mit einer rohrartigen Kabeltülle 9 aus einem elastischen Kunststoff versehen. Figur 1 zeigt den Stabmixer 1' in einem Nichtgebrauchszustand, in dem der Stabmixer 1' mit Hilfe einer Haltevorrichtung 10, die fest mit dem Stabmixer 1' verbunden ist, an einem Haken 20, beispielsweise einem Wandhaken, aufgehängt ist, der beispielsweise an einer Küchenwand befestigt ist. In diesem Nichtgebrauchszustand kann das Anschlusskabel 6 in mehreren Windungen um das Gehäuse 2 des Stabmixers 1' herum geschlungen und, wie nachfolgend beschrieben, an diesem festgelegt werden.

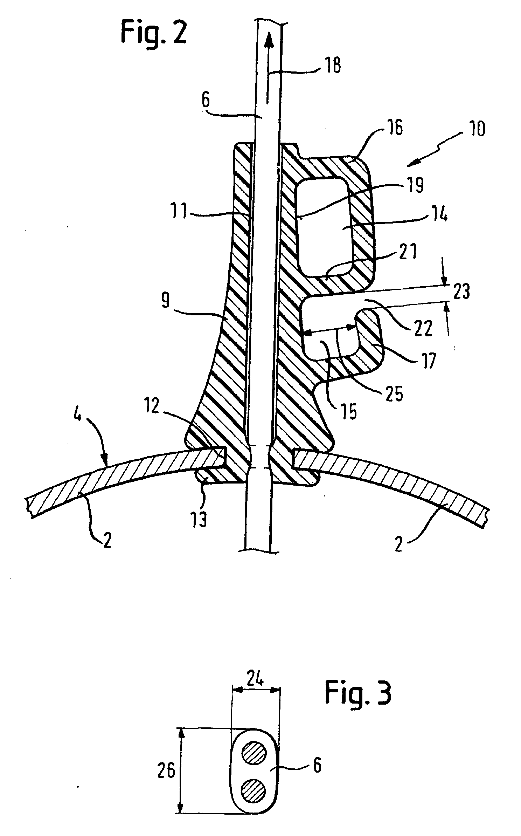

Die Kabeltülle 9 besteht aus einem elastischen Werkstoff, vorzugsweise einem gummielastischen Kunststoff, und weist ein schlauchförmiges Loch 11 auf, durch das das Anschlusskabel 6 des Stabmixers 1' geführt ist. Wie in der Detaildarstellung der Figur 2 in einer Schnittdarstellung gezeigt, ist die Kabeltülle 9 durch eine Einschnürung 12 und einen umlaufenden Rand 13 im Kopfteil 4 des Stabmixergehäuses 2 gehalten. An der Kabeltülle 9 ist einstückig die Haltevorrichtung 10 angeformt, die eine ringförmige Aussparung 14 (Schlaufe 14) zur Fixierung des Stabmixers 1' an dem Haken 20 aufweist. Zusätzlich umfasst die Haltevorrichtung 10 einen weiteren, randseitig geöffneten Hohlraum 15 zur Aufnahme mindestens einer Windung des Anschlusskabels 6.

Im Ausführungsbeispiel der Figuren 1 und 2 ist die Haltevorrichtung 10 durch einen Steg 16 und eine Zunge 17 aus einem elastischen, steifen Kunststoff gebildet, die an die Kabeltülle 9 angeformt sind, von dieser in Radialrichtung abragen und in einer gemeinsamen Ebene angeordnet sind, die parallel zur Axialrichtung (Pfeil 18) der Kabeltülle 9 verläuft. Der Steg 16 und die Zunge 17 haben einen kreisförmigen oder elliptischen Querschnitt. Der Steg 16 bildet zusammen mit der ihm gegenüberliegenden Außenwandung 19 der Kabeltülle 9 eine geschlossene Schlaufe 14, an der der Stabmixer 1' am Haken 20 aufgehängt werden kann. Die Zunge 17 wirkt mit dem ihr gegenüberliegenden Schenkel 21 des Stegs 16 in einer solchen Weise zusammen, dass zwischen der Zunge 17 und dem Steg 16 eine Einführöffnung 22 geschaffen ist, durch die das Anschlusskabel 6 in den zwischen der Zunge 17, dem Steg 16 und der Außenwandung 19 der Kabeltülle 9 gebildeten Hohlraum 15 eingeführt werden kann. Die Breite 23 der Einführöffnung 22 ist geringer als der minimale Querschnitt 24 des Anschlusskabels 6, so dass das Kabel 6 durch Krafteinwirkung in den Hohlraum 15 eingeschoben wird und nicht ohne Krafteinwirkung aus dem Hohlraum 15 herausgleiten kann. Der Hohlraum 15 ist in einer solchen Weise dimensioniert, dass das im Hohlraum gehaltene Anschlusskabel 6 entlang seiner Axialrichtung frei im Hohlraum 15 gleiten kann, der Stecker 17 jedoch nicht durch den Hohlraum 15 entweichen kann; der Querschnitt 25 des Hohlraums 15 ist größer ist als der maximale Querschnitt 26 des Anschlusskabels 6. Die Formgebung dieser Haltevorrichtung 10 in Zusammenwirken mit dem zähfesten Material der Kabeltülle 9 gewährleistet einerseits eine sichere Einschnappverbindung des Anschlusskabels 6 und andererseits die Lösung der Verbindung mit geringem Kraftaufwand.

Alternativ zu der in Figur 2 gezeigten Ausgestaltung kann in einer nicht beanspruchten Ausgestaltung der Hohlraum 15 in einer solchen Weise dimensioniert werden, dass das Anschlusskabel 6 im Hohlraum 15 geklemmt ist. In diesem Fall kann der Hohlraum 15 durch eine schlitzförmige Aussparung der Breite 23 gebildet sein, wobei die Tiefe des Schlitzes mindestens dem maximalen Querschnitt 26 des Kabels 6 entsprechen sollte, damit das Kabel 6 sicher im Schlitz gehalten werden kann.

Alternativ zu der in Figuren 1 und 2 gezeigten Haltevorrichtung 10, die an die Kabeltülle 9 angeformt ist und aus einem gummielastischen Kunststoff besteht, kann die Haltevorrichtung auch aus einem weniger elastischen Kunststoff oder aus einem metallischen Werkstoff bestehen. So kann die Haltevorrichtung beispielsweise aus einem thermoplastischen Kunststoff geformt und einstückig an das Gehäuse 2 des Stabmixers 1' angeformt sein. Wenn die Haltevorrichtung aus einem harten Werkstoff (z.B. einem thermoplastischem Kunststoff oder Metall) besteht, sind die Wandungen der Haltevorrichtung im Bereich der Einführöffnung und des randoffenen Hohlraums vorteilhafterweise verrundet, um eine Gefahr der Beschädigung des Anschlusskabels und/oder der Haltevorrichtung beim Ein- und Ausführen des Kabels zu vermeiden. Wenn die Haltevorrichtung eine sehr glatte Oberfläche aufweist, ist es weiterhin vorteilhaft, die Einführöffnung des randoffenen Hohlraums mit Noppen oder einer Riffelung zum Festhalten des in die Einführöffnung eingeklemmten Anschlusskabels 6 zu versehen.

## Patentansprüche

1. Elektrisch betreibbares Kleingerät, insbesondere Haushalts- oder Handwerkzeuggerät, mit einer Haltevorrichtung (10) zur hängenden Aufbewahrung des Kleingeräts (1,1'), wobei die Haltevorrichtung (10) an dem Kleingerät (1,1') befestigt ist und eine ringförmige Aussparung (14) zur Aufnahme eines Halterungselements (20), insbesondere eines Hakens, aufweist, wobei die Haltevorrichtung (10) einen randoffenen Hohlraum (15) zur Aufnahme mindestens einer Windung eines Anschlusskabels (6) aufweist, wobei der Hohlraum (15) dergestalt ausgebildet ist, dass das im Hohlraum (15) gehaltene Anschlusskabel (6) entlang seiner Axialrichtung frei im Hohlraum (15) gleiten kann, wobei das Kleingerät (1,1') ein Anschlusskabel (6) zur Verbindung des Kleingeräts (1,1') mit einer Stromquelle umfasst, das aus einem Gehäuse (2) des Kleingeräts (1,1') heraustritt und im Austrittsbereich (8) aus dem Gehäuse (2) von einer Kabeltülle (9) umgriffen ist, und dass die Haltevorrichtung (10) an die Kabeltülle (9) angeformt ist,
wobei die Haltevorrichtung (10) einstückig mit der Kabeltülle (9) ausgestaltet ist, **dadurch gekennzeichnet, dass** der randoffene Hohlraum (15) eine Einführöffnung (22) aufweist, deren Breite (22) geringer ist als der minimale Querschnitt (25) des Anschlusskabels (6),
wobei der Hohlraum (15) einen Querschnitt (25) aufweist, der größer ist als der maximale Querschnitt (26) des Anschlusskabels (6).

2. Kleingerät nach Anspruch 1, **dadurch gekennzeichnet, dass** die Haltevorrichtung (10) unlösbar mit dem Kleingerät (1,1') verbunden ist.

3. Kleingerät nach Anspruch 1 oder 2, **dadurch gekennzeichnet, dass** die Haltevorrichtung (10) aus einem elastischen Kunststoff besteht.

4. Kleingerät nach einem der vorangehenden Ansprüche, **dadurch gekennzeichnet, dass** die Haltevorrichtung (10) an ein Gehäuse (2) des Kleingeräts (1,1') angeformt ist.

5. Kleingerät nach Anspruch 1, **dadurch gekennzeichnet, dass** eine Einführöffnung (22) des randoffenen Hohlraums (15) abschnittsweise mit einer Riffelung oder mit Noppen versehen ist.

6. Kleingerät nach einem der Ansprüche 1 oder 5, **dadurch gekennzeichnet, dass** der Hohlraum (15) einen Querschnitt (25) aufweist, der größer ist als der maximale Querschnitt (26) des Anschlusskabels (6).

7. Kleingerät nach einem der vorangehenden Ansprüche, **dadurch gekennzeichnet, dass** die Haltevorrichtung (10) durch einen Steg (16) und eine Zunge (17) aus einem elastischen, steifen Kunststoff gebildet sind, die an die Kabeltülle (9) angeformt sind.

## Claims

1. Electrically operable small appliance, in particular domestic or hand tool appliance, having a holding apparatus (10) for the suspended storage of the small appliance (1, 1'), the holding apparatus (10) being fastened to the small appliance (1, 1') and having an annular cutout (14) for accommodating a securing element (20), in particular a hook, wherein the holding apparatus (10) has a hollow space (15) that is open at the sides for accommodating at least one winding of a connecting cable (6), the hollow space (15) being configured in such a manner that the connecting cable (6) held in the hollow space (15) can slide freely in the hollow space (15) along its axial direction, the small appliance (1, 1') comprising a connecting cable (6) for connecting the small appliance (1, 1') to a power source, said connecting cable (6) exiting from a housing (2) of the small appliance (1, 1') and being enclosed by a cable bushing (9) in the exit region (8) from the housing (2), the holding apparatus (10) being moulded onto the cable bushing (9)
the holding apparatus (10) being embodied as a single piece with the cable bushing (9), **characterised in that**
the hollow space (15) that is open at the sides has an insertion opening (22), the width (22) of which is smaller than the minimum cross section (25) of the connecting cable (6),
the hollow space (15) having a cross section (25), which is larger than the maximum cross section (26) of the connecting cable (6).

2. Small appliance according to claim 1, **characterised in that** the holding apparatus (10) is connected in a non-releasable manner to the small appliance (1, 1').

3. Small appliance according to claim 1 or 2, **characterised in that** the holding apparatus (10) is made of an elastic plastic.

4. Small appliance according to one of the preceding claims, **characterised in that** the holding apparatus (10) is moulded onto a housing (2) of the small appliance (1, 1').

5. Small appliance according to claim 1, **characterised in that** segments of an insertion opening (22) of the hollow space (15) that is open at the sides are provided with fluting or nubs.

6. Small appliance according to one of claims 1 or 5, **characterised in that** the hollow space (15) has a cross section (25), which is larger than the maximum cross section (26) of the connecting cable (6).

7. Small appliance according to one of the preceding claims, **characterised in that** the holding apparatus (10) is formed by a web (16) and a tongue (17) made of an elastic, rigid plastic and moulded onto the cable bushing (9).

## Revendications

1. Petit appareil à fonctionnement électrique, en particulier appareil ménager ou outil à main, doté d'un dispositif de retenue (10) pour le rangement suspendu du petit appareil (1, 1'), le dispositif de retenue (10) étant fixé sur le petit appareil (1, 1') et présentant un évidement (14) en forme d'anneau, destiné à recevoir un élément d'accrochage (20), en particulier un crochet, le dispositif de retenue (10) présentant un espace creux (15) à bord ouvert, destiné à recevoir au moins une boucle d'un câble de raccordement (6), l'espace creux (15) étant conçu de telle sorte que le câble de raccordement (6) retenu dans l'espace creux (15) puisse glisser librement, le long de sa direction axiale, dans l'espace creux (15), le petit appareil (1, 1') comprenant un câble de raccordement (6) permettant de relier le petit appareil (1, 1') à une source de courant, câble qui sort d'un boîtier (2) du petit appareil (1, 1') et est entouré dans la zone de sortie (8) du boîtier (2) d'un passe-câble (9), et le dispositif de retenue (10) étant moulé sur le passe-câble (9), le dispositif de retenue (10) formant une seule pièce avec le passe-câble (9), **caractérisé en ce que** l'espace creux (15) à bord ouvert présente une ouverture d'insertion (22), dont la largeur (23) est inférieure à la section minimale (25) du câble de raccordement (6), l'espace creux (15) ayant une section (25), qui est supérieure à la section maximale (26) du câble de raccordement (6).

2. Petit appareil selon la revendication 1, **caractérisé en ce que** le dispositif de retenue (10) est relié de manière indissociable au petit appareil (1, 1').

3. Petit appareil selon la revendication 1 ou 2, **caractérisé en ce que** le dispositif de retenue (10) est en matière plastique élastique.

4. Petit appareil selon l'une des revendications précédentes, **caractérisé en ce que** le dispositif de retenue (10) est moulé sur un boîtier (2) du petit appareil (1, 1').

5. Petit appareil selon la revendication 1, **caractérisé en ce qu'**une ouverture d'insertion (22) de l'espace creux (15) à bord ouvert est pourvue, par endroits, d'un striage ou de boutons.

6. Petit appareil selon l'une des revendications 1 à 5, **caractérisé en ce que** l'espace creux (15) a une section (25), qui est supérieure à la section maximale (26) du câble de raccordement (6).

7. Petit appareil selon l'une des revendications précédentes, **caractérisé en ce que** le dispositif de retenue (10) est formé par une barrette (16) et une languette (17) en matière plastique rigide élastique, qui sont moulées sur le passe-câble (9).
